(19) Europäisches Patentamt
European Patent Office
Office européen des brevets

(11) **EP 2 290 405 A1**

(12) **EUROPEAN PATENT APPLICATION**
published in accordance with Art. 153(4) EPC

(43) Date of publication:
**02.03.2011 Bulletin 2011/09**

(51) Int Cl.:
*G01T 3/00* (2006.01)

(21) Application number: **09769825.2**

(22) Date of filing: **27.02.2009**

(86) International application number:
**PCT/JP2009/000906**

(87) International publication number:
**WO 2009/157115 (30.12.2009 Gazette 2009/53)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **24.06.2008 JP 2008164588**

(71) Applicants:
• **Fuji Electric Systems Co., Ltd.
Tokyo 141-0032 (JP)**
• **Nakamura, Takashi
Tokyo
177-0042 (JP)**

(72) Inventors:
• **NAKAMURA, Takashi
Nerima-ku
Tokyo 177-0042 (JP)**
• **NUNOMIYA, Tomoya
Tokyo 141-0032 (JP)**

(74) Representative: **Lucas, Phillip Brian
Lucas & Co.
135 Westhall Road
Warlingham, Surrey CR6 9HJ (GB)**

(54) **NEUTRON DOSIMETER**

(57) In a neutron dosimeter, G(L) function data, which causes the tendency of a characteristic when neutron energy is plotted along the horizontal axis and the ambient dose equivalent (1 cm dose equivalent) is plotted along the vertical axis to approximate a neutron fluence-ambient dose equivalent (1 cm dose equivalent) conversion coefficient curve (neutron energy-ICRP 74 H* (10) response curve), is used to compensate the output of a mixed gas detector which encapsulates a gas mixture of a nitrogen gas and an organic compound gas and outputs detection pulse signals with peaks according to the energies of detected neutrons.

F I G. 1

EP 2 290 405 A1

**Description**

TECHNICAL FIELD

This invention relates to a neutron dosimeter, which detects neutron energies at various leakage neutron sites where there are concerns of neutron exposure, such as in nuclear reactors and particle accelerator facilities, and which displays an ambient dose equivalent (1 cm dose equivalent) as a operational quantity.

BACKGROUND ART

Effective doses indicating the extent of the effect of exposure to neutrons on the human body were introduced in ICRP recommendations in 1990. However, because these effective doses are quantities which cannot be measured directly, operational quantities which correspond to effective doses have been devised. Laws stipulate the measurement of ambient dose equivalents as operational quantities have been established.

Portable neutron dosimeters (commonly known as REM counters) are used in such measurements. Neutron dosimeters obtain detection signals from incident thermal neutrons and from intermediate- to fast neutrons with energies higher than thermal neutrons, and perform signal processing of such detection signals, converting the result into an ambient dose equivalent which can be immediately read from an indicator, enabling direct reading of ambient dose equivalents. Such neutron dosimeters comprise thermal neutron detectors. As thermal neutron detectors, $BF_3$ proportional counters, $^3He$ proportional counters, as well as $^6LiI(Eu)$ scintillation detectors and the like are used.

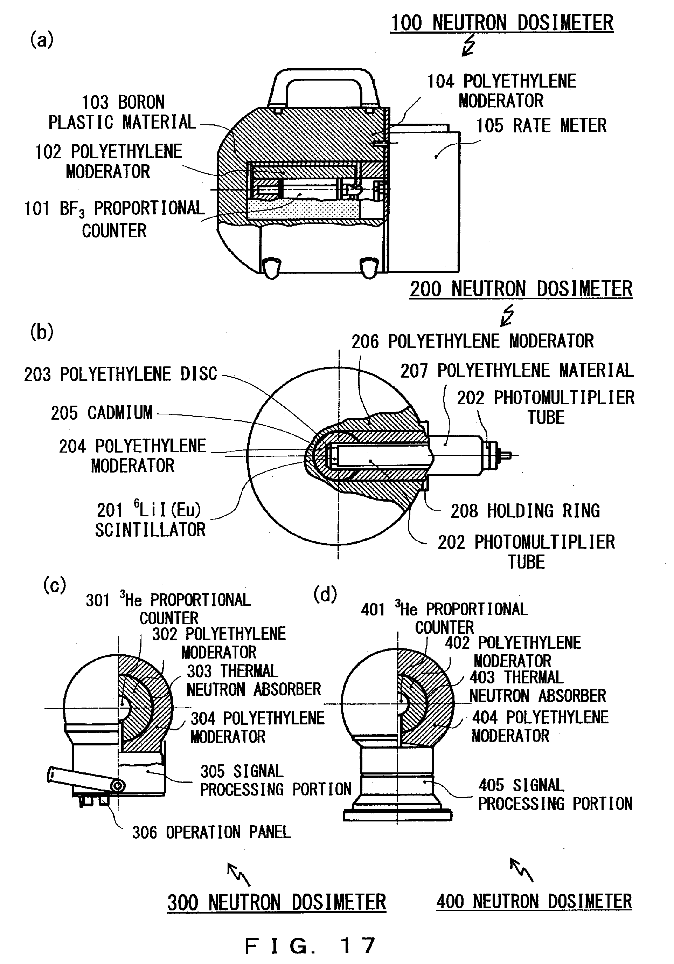

Such a neutron dosimeter of the prior art is explained referring to the drawings. Fig. 17 is an explanatory diagram of a neutron dosimeter of the prior art, where Fig. 17(a) shows the internal construction of a first example of the prior art, Fig. 17(b) shows the internal construction of a second example of the prior art, Fig. 17(c) shows the internal construction of a third example of the prior art, and Fig. 17(d) shows the internal construction of a fourth example of the prior art.

The neutron dosimeter 100 of the first example of the prior art shown in Fig. 17(a) is an example which uses a $BF_3$ proportional counter 101; the periphery of the $BF_3$ proportional counter 101 is covered with polyethylene moderator 102, further covered with a boron plastic material 103 which is a neutron absorber, and finally covered with polyethylene moderator 104, in a multilayer structure. A rate meter 105 displays the ambient dose equivalent after operations on the detection signals by means of an indicator (not shown).

The neutron dosimeter 200 of the second example of the prior art shown in Fig. 17(b) is an example which uses a $^6LiI(Eu)$ scintillation detector; a $^6LiI(Eu)$ scintillation detector comprises a $^6LiI(Eu)$ scintillator 201 and a photomultiplier tube 202. The periphery of the $^6LiI(Eu)$ scintillator 201 is covered with a polyethylene moderator 204 with a polyethylene disc 203 intervening, further covered with cadmium 205 which is a neutron absorber, and finally is entirely covered with a polyethylene moderator 206. The photomultiplier tube 202 is covered with polyethylene material 207. The polyethylene moderator 206 is formed into a spherical shape, and the photomultiplier tube 202 holds the polyethylene moderator 206 by means of a holding ring 208.

The neutron dosimeter 300 of the third example of the prior art shown in Fig. 17(c) is an example which uses a $^3He$ proportional counter 301; the periphery of the $^3He$ proportional counter 301 is covered with polyethylene moderator 302, further covered with a neutron absorber 303, and finally covered with polyethylene moderator 304, in a multilayer structure. After operations on detection signals by a signal processing portion 305, the ambient dose equivalent is displayed by means of an indicator (not shown) of an operation panel 306. The outermost polyethylene moderator 304 is formed with the greater portion of the material in a spherical shape.

The neutron dosimeter 400 of the fourth example of the prior art shown in Fig. 17(d) is an example which uses a $^3He$ proportional counter 401; the $^3He$ proportional counter 401 is covered with polyethylene moderator 402, further covered with a neutron absorber 403, and finally covered with polyethylene moderator 404, in a multilayer structure. After operations on detection signals by a signal processing portion 405, the ambient dose equivalent is displayed by means of an external indicator (not shown). The outermost polyethylene material 404 is formed substantially in a spherical shape.

Next, the reason for covering detection locations with polyethylene material in each of the first to fourth examples is explained. To make the explanation more specific, examples of a $BF_3$ proportional counter and a $^3He$ proportional counter are considered. The detecting principle of neutrons by $BF_3$ proportional counter and $^3He$ proportional counter involves obtaining pulse-shaped detection signals upon ionization of the encapsulated gas ($BF_3$, $^3He$) by charged particles which occur through nuclear reactions between incident thermal neutrons and the encapsulated gas ($BF_3$, $^3He$) in the proportional counter.

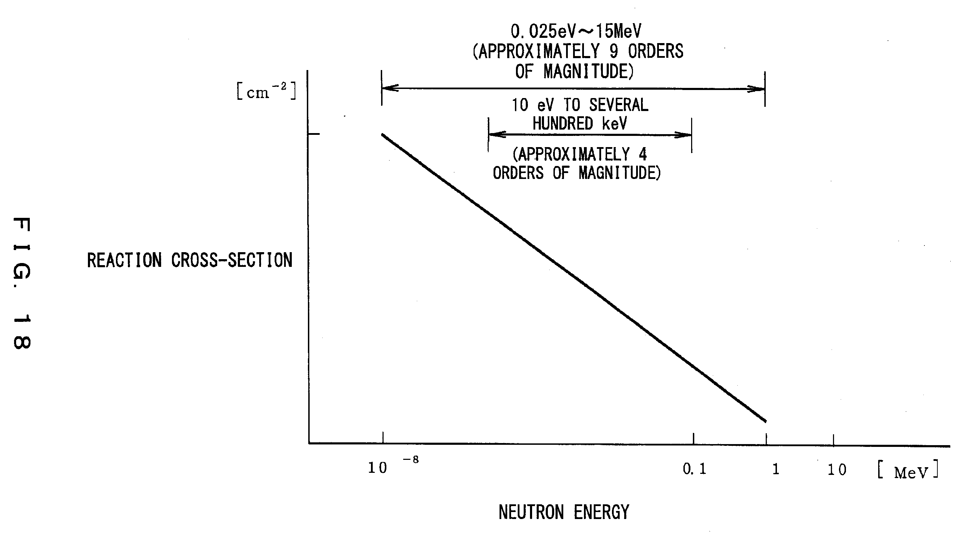

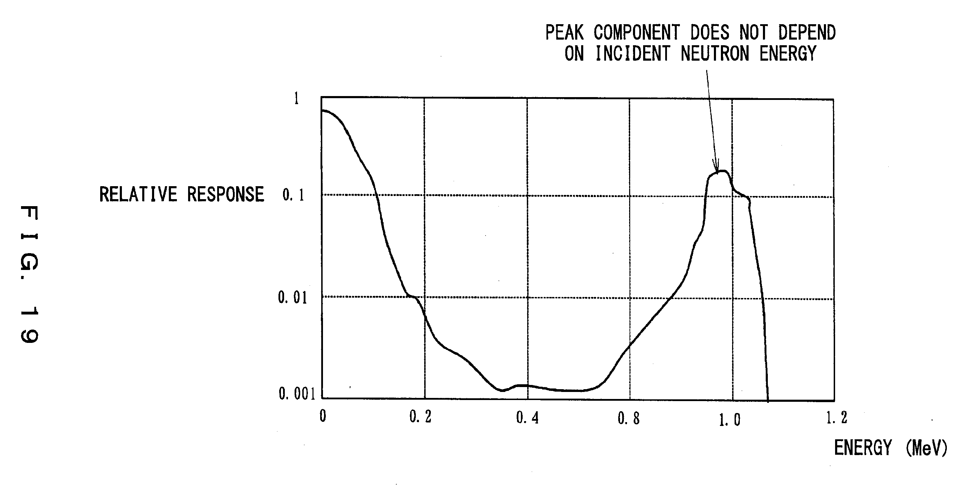

The response of such proportional counter is explained. Fig. 18 is a characteristic diagram showing the response of a proportional counter to neutron energies. The sensitivity of such a proportional counter to neutrons extends over nine orders of magnitude of neutron energies, from thermal neutrons to intermediate- to high-energy neutrons; but as shown in Fig. 18, compared with the response over the entire energy range (from 0.025 eV to 15 MeV (approx. nine orders of magnitude)), the response to a partial energy range (10 eV to several hundred keV (approx. four orders of magnitude)) falls to approximately 1/10 to 1/1000. This characteristic is determined by the neutron reaction cross-section of the encapsulated gas ($BF_3$, $^3He$). Hence in a single proportional counter, a constant pulse height is output regardless of neutron energy, as shown in the characteristic diagram for the output of a mixed gas detector in Fig. 19, and without further modification sensitivity has been unsatisfactory.

Hence in order to obtain a neutron dosimeter with improved response in this partial energy range from 10 eV to several hundred keV (approx. four orders of magnitude), the periphery of the proportional counter is surrounded with a polyethylene moderator. Because the polyethylene moderator converts intermediate- to fast neutrons into thermal neutrons through elastic scattering, the proportional counter can also detect incident intermediate- to fast neutrons.

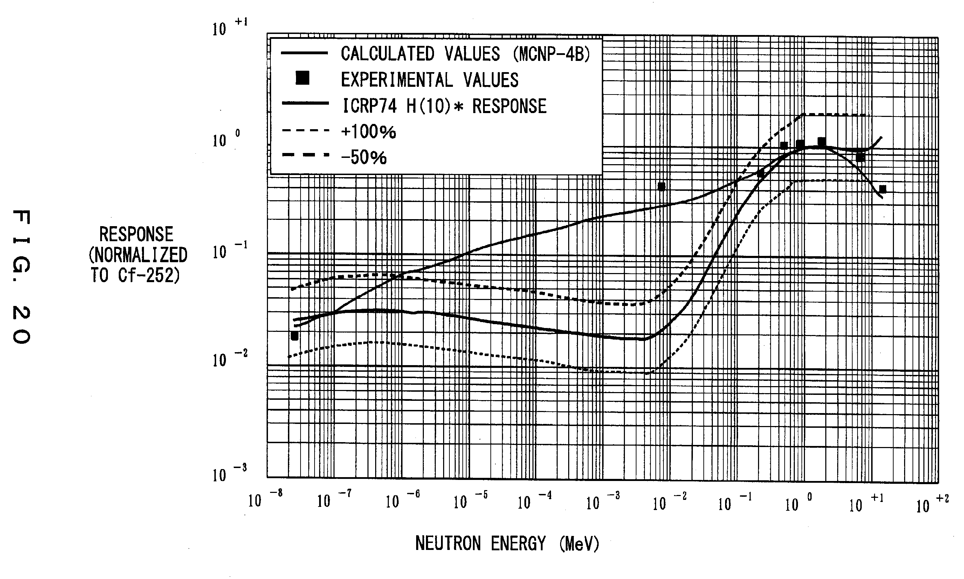

Further, by appropriately arranging cadmium (Cd), boron (B), or other neutron-absorbing materials within the polyethylene moderator, the neutron energy response characteristic, which is a sensitivity characteristic (counting rate per fluence) indicating the sensitivity of a thermal neutron detector, is made to approach the neutron fluence-to-ambient dose equivalent (1 cm dose equivalent) conversion coefficient curve stipulated by law. This neutron fluence-to-ambient dose equivalent (1 cm dose equivalent) conversion coefficient curve is a curve which plots, by neutron energy, the conversion coefficients for converting a neutron fluence detected for a certain neutron energy into an ambient dose equivalent (1 cm dose equivalent), and may for example be a curve like the thick-line curve shown in Fig. 20. This Fig. 20 is an explanatory diagram showing detection sensitivity response characteristic curves and ICRP 74 H* (10) response curves for neutron energies. This neutron fluence-to-ambient dose equivalent (1 cm dose equivalent) conversion coefficient curve is shown in Fig. 20, together with units, as a neutron energy-ICRP 74 H* (10) response curve.

By converting detection signals from a thermal neutron detector combining a proportional counter and polyethylene moderator based on such a neutron fluence-to-ambient dose equivalent (1 cm dose equivalent) conversion coefficient curve, ambient dose equivalents (1 cm dose equivalents) can be read directly from detection signals expressing the counting rate per unit fluence in the neutron dosimeter. Neutron dosimeters using such thermal neutron detectors are widely marketed commercially, and are employed in various environments where there are concerns of neutron exposure. Thermal neutrons are detected based on similar principles in neutron dosimeters employing $^6LiI(Eu)$ scintillation detectors of the prior art as well. The neutron dosimeters 100 to 400 of the prior art are such devices.

As another technology of the prior art, for example, the invention disclosed in Patent Document 1 (Japanese Patent Application Laid-open No. 2007-218657, invention title: Neutron Detector and Neutron Dosimeter), by this applicant and by this inventor, is known.

In Patent Document 1, a proportional counter encapsulating a gas mixture prepared by mixing in a prescribed mixing ratio nitrogen gas and organic compound gas is comprised; the neutron detector is designed such that the neutron energy-response characteristic, which is the detection sensitivity of the proportional counter, is made to approximate the neutron fluence-to-ambient dose equivalent (1 cm dose equivalent) conversion coefficient curve stipulated by laws related to the prevention of radiation damage (Law Concerning Prevention of Radiation Hazards Due to Radioisotopes, and the like). Also, in this neutron dosimeter, detection signals output from this neutron detector are processed, and the ambient dose equivalent, which is an operational quantity, is displayed.

Moreover, as other prior art, for example the invention disclosed in Patent Document 2 (Japanese Patent Application Laid-open No. 2006-275602, invention title: Method of High-Sensitivity Dose Measurement of High-Energy Neutrons, Photons, and Muons), is known.

In Patent Document 2, light emitted from a detector in which are combined an organic liquid scintillator and a silver-containing zinc sulfide sheet-shape scintillator comprising lithium-6 is converted into electrical signals by a photomultiplier tube and then branched into a plurality of signals, and the voltage of each branch signal is analyzed using a digital waveform analyzer device to determine the type of radiation incident on the detector and the light emission quantity; by using an operator to convert the light emission quantity corresponding to each type of radiation into a dose, neutron, photon, and muon doses are measured in realtime and with high sensitivity.

Patent Document 1: Japanese Patent Application Laid-open No. 2007-218657, corresponding to U.S. Patent Application 12/034,552

Patent Document 2: Japanese Patent Application Laid-open No. 2006-275602

The polyethylene 104 of the neutron dosimeter using a $BF_3$ proportional counter of the prior art, shown in Fig. 17(a), is large in size, with a diameter exceeding 20 cm, and the neutron dosimeter 100 is large and heavy.

Further, the polyethylene moderator 206 of the neutron dosimeter using a $^6LiI(Eu)$ scintillation detector of the prior art, shown in Fig. 17(b), is large in size, with a diameter of 20 cm or 30 cm, and the neutron dosimeter 200 is also large and heavy.

Further, the polyethylene materials 304, 404 of the neutron dosimeters using a $^3He$ proportional counter tube of the prior art shown in Fig. 17(c) and Fig. 17(d) are both large in size, with diameters exceeding 20 cm, and the neutron dosimeters 300, 400 are also large and heavy.

As explained above, in the prior art polyethylene moderators are used with sizes of approximately 20 cm, so that weights exceed 10 kg, and even lighter devices weight approximately 8 kg. As a neutron dosimeter which is portable and meant to be carried, a weight of nearly 10 kg poses a serious problem in that using the device is extremely difficult.

Further, in a neutron dosimeter of the prior art, the neutron energy-response characteristic is made to approximate the neutron fluence-to-ambient dose equivalent (1 cm dose equivalent) conversion coefficient curve stipulated by law; but in actuality this approximation is not necessarily achieved. In this respect, as shown in Fig. 20 described above, energy characteristics representing the sensitivity of thermal neutron detectors (calculated values, experimental values) coincide closely with the neutron energy-ICRP 74 H* (10) response curve (neutron fluence-ambient dose equivalent (1 cm dose equivalent) conversion coefficient curve) at 1 eV or below and at 100 keV or above; but there is considerable overestimation in the range from 1 eV to 100 keV. Thus in the prior art, there are areas of the neutron energy-response characteristic which are different from tendencies in the neutron fluence-to-ambient dose equivalent (1 cm dose equivalent) conversion coefficient curve stipulated by law, and so there has been the problem that approximations could not necessarily be called satisfactory.

Further, in the neutron dosimeter disclosed in Patent Document 1, the neutron detector can detect neutron energies over a broad range from thermal neutrons to intermediate-to fast neutrons through a novel detection principle, and moreover has detection sensitivity which closely matches the neutron fluence-to-ambient dose equivalent (1 cm dose equivalent) conversion coefficient curve stipulated by law, and, compared with the detection sensitivities of existing neutron detectors such as those disclosed in Fig. 17(a), Fig. 17(b), Fig. 17(c), and Fig. 17(d), has still better characteristics over the interval from 1 eV to 100 keV in particular. Further, this neutron detector has detection sensitivity for intermediate - to fast neutrons as well, and by suppressing to a minimum the use of the moderator which moderates intermediate- to fast neutrons and generates thermal neutrons as in the prior art, and by also causing the detection sensitivity of the neutron detector to closely coincide with the neutron fluence-to-ambient dose equivalent (1 cm dose equivalent) conversion coefficient curve, and suppressing to a minimum the use of thermal neutron-absorbing materials as well, lighter weight is achieved.

In this way, the neutron dosimeter disclosed in Patent Document 1 is superior as a neutron dosimeter in that the moderator volume is reduced and the weight is light at approximately 2 kg or less; but there are demands for further reduction in weight. It is conceivable that the moderator can be eliminated to achieve the lightest possible weight, and where detection sensitivity is concerned, signal processing of detection signals can be performed to cause the detection sensitivity to coincide the neutron fluence-to-ambient dose equivalent (1 cm dose equivalent) conversion coefficient curve; but in the case of the neutron dosimeter disclosed in Patent Document 1, when obtaining the pulse height using a pulse height discriminator (discriminator circuit), there exists a lower-limit level of measurement due to electrical circuit noise and signal noise due to $\gamma$ rays. When there is no moderator, for example in the partial energy range from 10 eV to several hundred keV (approx. four orders of magnitude) the detection sensitivity declines, similar to the characteristic shown in Fig. 19, and in this region a situation occurs in which detection by the pulse height discriminator (discriminator circuit) is not possible, and so it was found that if in the neutron dosimeter disclosed in Patent Document 1 the moderator is eliminated and an organic gas mixture alone is used, there is the practical difficulty that neutrons in the partial energy range (10 eV to several hundred keV (approx. four orders of magnitude)) cannot be measured with good accuracy.

And, in the case of the detector disclosed in Patent Document 2 combining an organic liquid scintillator and a silver-containing zinc sulfide sheet-shape scintillator comprising lithium-6, from the fact that a liquid is used, clearly it is difficult to achieve light weight.

In order to achieve such a neutron dosimeter with light weight, a new principle, not yet employed, has been sought. In particular, if a moderator is not used, the detection sensitivity of the detector deviates from the detection sensitivity having a fluence energy-response characteristic which closely approximates the neutron fluence-to-ambient dose equivalent (1 cm dose equivalent) conversion coefficient curve (neutron energy-ICRP 74 H* (10) response curve) (hereafter called the target detection sensitivity), thereby compensation has to be taken into account.

DISCLOSURE OF THE INVENTION

An object of this invention is to provide a neutron dosimeter which does not use a moderator for detection and so can greatly reduced in weight, and which can perform compensation through signal processing even when the actual detection sensitivity deviates from the target detection sensitivity due to the absence of a moderator.

In order to resolve the above problems, a neutron dosimeter of this invention comprises a mixed gas detector, which encapsulates a gas mixture comprising a nitrogen gas and an organic compound gas and having a nitrogen gas mixing ratio $\alpha$ of $0.05 \leq \alpha \leq 0.25$ and an organic compound gas mixing ratio $\beta$ of 1.0 - $\alpha$ when the sum of the mixing ratio $\alpha$ of the nitrogen gas and the mixing ratio $\beta$ of the organic compound gas is 1.0, and which, in response to neutron detection, outputs detection pulse signals having pulse height according to the energy of the detected neutron; an amplifier, which amplifies the detection pulse signals output from the mixed gas detector to a prescribed pulse height level; an A/D conversion portion, which converts the detection pulse signals output from the amplifier into detection pulse data; a data correction portion, in which G(L) function data is registered by pulse height level L, and which converts the detection pulse data, output from the A/D conversion portion, into G(L) function data corresponding to the pulse height level L; a dose equivalent operation portion, which counts the number of G(L) function data items output from the data correction portion by peak level and generates count data by pulse height level, multiplies the G(L) function data and count data by pulse height level to generate product data by peak level, and adds all the product data by peak level to output ambient dose equivalent (1 cm dose equivalent) data; and a display portion which uses ambient dose equivalent (1 cm dose equivalent) data to display ambient dose equivalents (1 cm dose equivalents), and G(L) function data is employed such that the tendency of the characteristic is made to approximate a neutron fluence-to-ambient dose equivalent (1 cm dose equivalent) conversion coefficient curve (neutron energy-ICRP 74 H* (10) response curve), when neutron energy is plotted along the horizontal axis and the ambient dose equivalent (1 cm dose equivalent) is plotted along the vertical axis.

Further, it is preferable that a neutron dosimeter of this invention employ methane gas as the organic compound gas, and that the nitrogen gas mixing ratio be $\alpha = 0.20$ and that the methane gas mixing ratio be $\beta = 0.80$.

Further, it is preferable that in a neutron dosimeter of this invention, the gas mixture which is encapsulated in the mixed gas detector have an internal pressure of 0.1 atmosphere (0.01 MPa) or higher and 25 atmospheres (2.5 MPa) or lower.

Further, in order to perform correction for neutron energies from 10 eV to 400 keV among the entire range of neutron energies from 0.025 eV to 15 MeV of incident neutrons, the data correction portion of a neutron dosimeter of this invention discards detection pulse data when detection pulse data with a peak level of 400 keV or below is input, outputs corrected G'(L) function data by peak level when detection pulse data with a pulse height level of 400 keV to 15 MeV is input; the dose equivalent operation portion multiplies the corrected G'(L) function data and the count data by peak level to generate product data for peaks from 400 keV to 15 MeV, and outputs data of the sum of all the product data for peaks from 400 keV to 15 MeV as ambient dose equivalent (1 cm dose equivalent) data.

## BRIEF DESCRIPTION OF THE DRAWINGS

Fig. 1 is a block configuration diagram of the neutron dosimeter of a preferred embodiment of implementation of the invention;

Fig. 2 includes Fig. 2(a) that shows a perspective view explaining a mixed gas detector (hollow-cylinder type), Fig. 2(b) that shows a front view explaining a mixed gas detector (hollow-cylinder type), and Fig. 2(c) that shows a cross-sectional view explaining a mixed gas detector (hollow-cylinder type);

Fig. 3 includes Fig. 3(a) that shows a detailed diagram of a data correction portion;, and Fig. 3(b) that shows a detailed diagram of a dose equivalent operation portion;

Fig. 4 is a characteristic diagram of the number of neutrons versus the energy of neutrons at 100 keV or below incident on a mixed gas detector;

Fig. 5 is a characteristic diagram of the count number versus neutron energies at 100 keV or below;

Fig. 6 is a characteristic diagram showing the number of neutrons versus neutron energies at 100 keV or above incident on a mixed gas detector;

Fig. 7 is a characteristic diagram showing the count number versus neutron energies at 100 keV or above;

Fig. 8 is a characteristic diagram showing the response of a mixed gas detector versus neutron energies (measured results);

Fig. 9 is a characteristic diagram showing characteristics, by mixing ratio, for organic gas mixtures;

Fig. 10 is a characteristic diagram of the radiation dose rate versus distance from the neutron source;

Fig. 11 is a characteristic diagram of statistical error versus radiation dose rate;

Fig. 12 is a characteristic diagram showing characteristics by mixing ratio of the organic mixing gas;

Fig. 13 is a characteristic diagram showing the energy spectrum of background neutrons (arising from cosmic rays);

Fig. 14 shows the neutron energy spectrum when neutrons generated by a high-energy accelerator (800 MeV) pass through a concrete shielding member (an actual near field);

Fig. 15 shows the neutron energy spectrum occurring for a 252Cf neutron beam source, and the neutron energy spectrum for a field in which a shielding member exists (an actual near field);

Fig. 16 is a characteristic diagram of G(L) and G'(L) for the output peak L;

Fig. 17 shows explanatory diagrams of neutron dosimeters of the prior art, in which Fig. 17(a) shows the internal construction of a first example of the prior art, Fig. 17(b) shows the internal construction of a second example of the prior art, Fig. 17(c) shows the internal construction of a third example of the prior art, and Fig. 17(d) shows the internal construction of a fourth example of the prior art;

Fig. 18 is a characteristic diagram showing the response of a proportional counter tube to neutron energies;

Fig. 19 is a characteristic diagram showing the response of a proportional counter tube to neutron energies; and

Fig. 20 is an explanatory diagram explaining the response curve and H* (10) response curve of detection sensitivity versus neutron energy.

BEST MODE FOR CARRYING OUT THE INVENTION

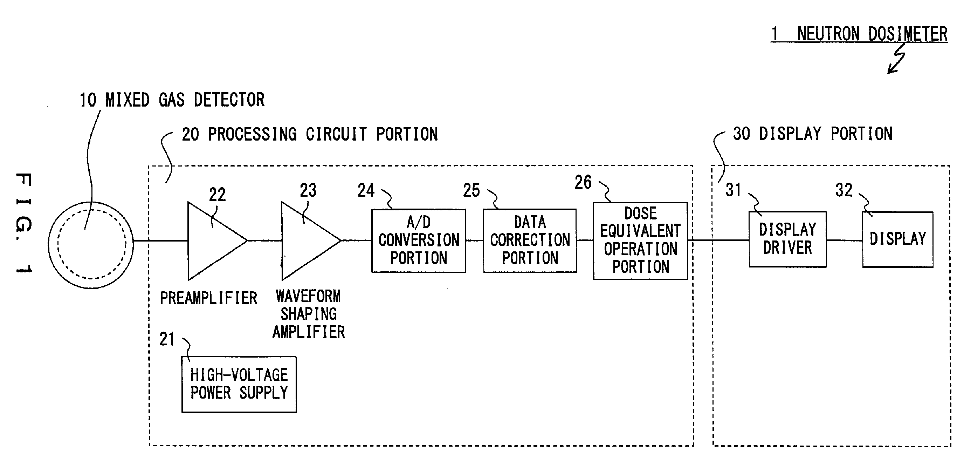

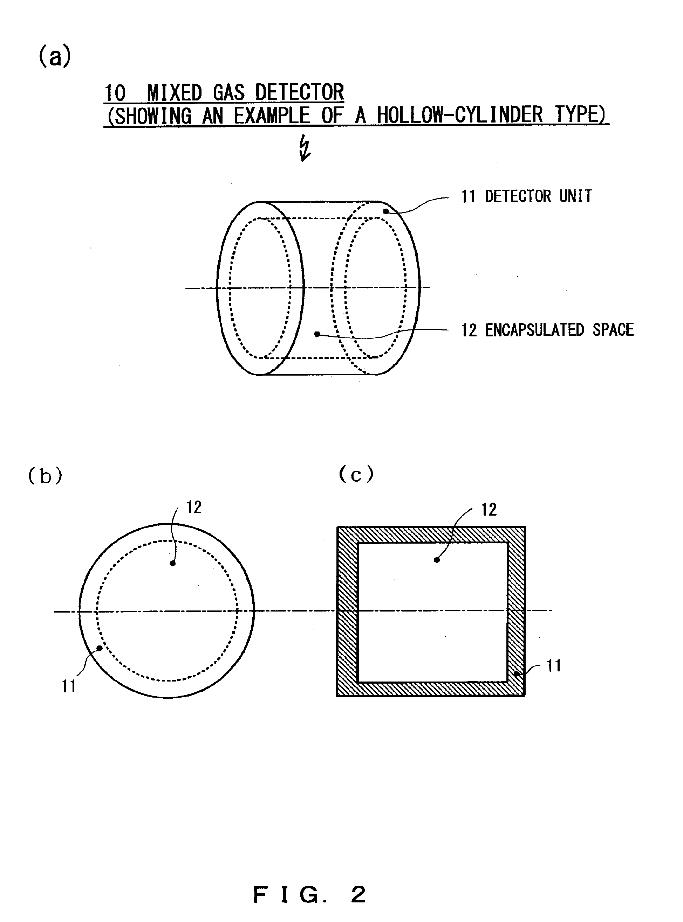

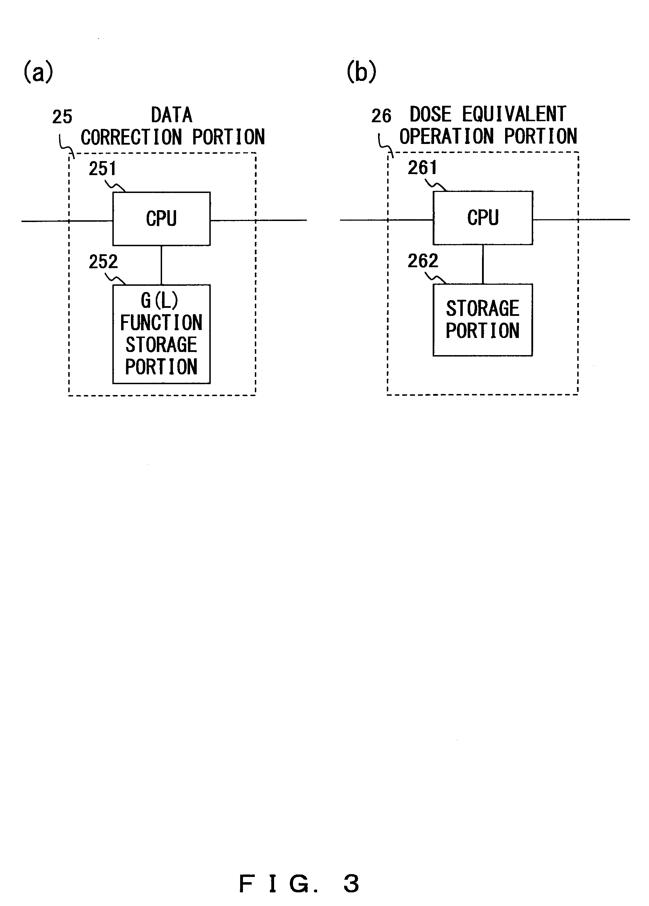

Next, preferred embodiments for implementing the invention are explained, referring to the drawings. First, the circuit configuration of a neutron dosimeter 1 is explained. Fig. 1 is a block configuration diagram of a neutron dosimeter of this embodiment. Fig. 2 explains a mixed gas detector (hollow-cylinder type), in which Fig. 2(a) is a perspective view, Fig. 2(b) is a front view, and Fig. 2(c) is a cross-sectional view. Fig. 3 is a detailed view of various portions, in which Fig. 3(a) is a detailed diagram of a data correction portion, and Fig. 3(b) is a detailed diagram of a dose equivalent operation portion.

The neutron dosimeter 1 comprises a mixed gas detector 10, processing circuit portion 20, and display portion 30, as shown in the block configuration diagram of Fig. 1.
The mixed gas detector 10 comprises a detector unit 11 and encapsulated space 12, as shown in detail in Fig. 2.

As shown in still more detail in Fig. 1, the processing circuit portion 20 comprises a high-voltage power supply 21, preamplifier 22, waveform shaping amplifier 23, A/D conversion portion 24, data correction portion 25, and dose equivalent operation portion 26. As shown in still more detail in Fig. 3(a), the data correction portion 25 comprises a CPU 251 and G(L) function storage portion 252. And, as shown in still more detail in Fig. 3(b), the dose equivalent operation portion 26 comprises a CPU 261 and storage portion 262.

As shown in still more detail in Fig. 1, the display portion 30 comprises a display driver 31 and display 32.
The neutron dosimeter 1 of this embodiment is improved in particular in that the mixed gas detector 10 (1) performs discrimination of the energies of incident neutrons, and moreover the processing circuit portion 20 to handle a partial range in which the neutron energy discrimination accuracy is not high (2) performs correction of the neutron dosimeter using a G(L) function and performs discrimination of the energies of incident neutrons over the entire range, and simultaneously (3) improves the accuracy of neutron dosimeter correction using the G(L) function to enhance detection accuracy.

The neutron dosimeter 1 achieves maintenance of detection performance even without a moderator, through the synergistic combination of these improvements.
Next, each of the portions is explained. First, the mixed gas detector 10 is explained referring to Fig. 2. The mixed gas detector 10 of this embodiment is explained assuming a hollow-column design, but a configuration may for example be adopted in which the detector is a spherical mixed gas detector 10, having a spherical encapsulated space.

As shown in Fig. 2, in this mixed gas detector 10, an encapsulated space 12 is formed within the detector unit 11, in which is formed a hollow columnar shape closed by discs at both ends. The mixed gas described below is encapsulated within this encapsulated space 12. The material of the detector unit 11 is SUS 304, and the thickness of the wall and of both ends is 0.3 mm. At a thickness of 0.3 mm, a pressure of 5 atmospheres (60°C) can be withstood. This is approximately 25% of the material strength limit. Even if the material were 0.1 mm thinner due to machining precision or to a collision or the like, pressure would be approximately 35% of the material strength limit, and there would be no danger of rupture or the like. As described below, when the encapsulated mixed gas is at 25 atmospheres, the thickness can be made 0.8 mm to secure sufficient strength. Electrodes are formed on the discs on both sides of the detector unit 11 so as to enclose the encapsulated space 12, and a high electric field is applied to the gas mixture in the encapsulated space 12 by means of these electrodes.

In this embodiment, as the gas mixture encapsulated in the mixed gas detector 10, a nitrogen gas and an organic compound gas (methane, ethane, propane) are mixed at a prescribed mixing ratio and encapsulated. The encapsulated organic compound gas is any one among methane, ethane, or propane. Or, the encapsulated gas may be a combination of any two among methane, ethane, and propane. Or, methane, ethane, and propane may all be encapsulated.

When neutrons are incident on a mixed gas detector 10 in which such a gas mixture is encapsulated, detection is performed as follows.

Low-energy neutrons, with energies below approximately 100 keV, collide primarily with nitrogen gas molecules, and through the nuclear reaction N(n,p), a proton p, which is a charged particle, is generated.

Moderate-energy neutrons, with energies from approximately 100 keV to approximately 10 MeV, primarily undergo H(n,n)p elastic scattering through collisions with the molecules of the organic compound gas (methane, ethane, propane, or a mixture of these), generating a recoil proton p, which is a charged particle.

In the case of high-energy neutrons exceeding approximately 10 MeV, in addition to recoil protons p resulting from H(n,n)p elastic scattering in collisions with organic compound gas molecules, such nuclear reactions as C(n,p), C (n,$\alpha$), N(n,$\alpha$), and the like occur, generating protons p and $\alpha$ particles, which are charged particles.

Low-energy neutrons, intermediate-energy neutrons, and high-energy neutrons are classifications employed for convenience in this Specification.

To summarize, the nitrogen gas is used to detect neutrons through reactions with low-energy neutrons (approximately 100 keV or below). That is, detection of low-energy neutrons depends on the quantity of nitrogen gas.

The organic compound gas (methane, ethane, propane) is used to detect neutrons through reactions with intermediate-energy neutrons (approximately 100 keV to 10 MeV) and with high-energy neutrons (approximately 10 MeV and above). That is, detection of intermediate- and high-energy neutrons depends on the quantity of organic compound gas (methane, ethane, propane).

These generated charged particles create ion pairs through ionization effect in the mixed gas detector, and through gas amplification of the created ion pairs, a current pulse is output.

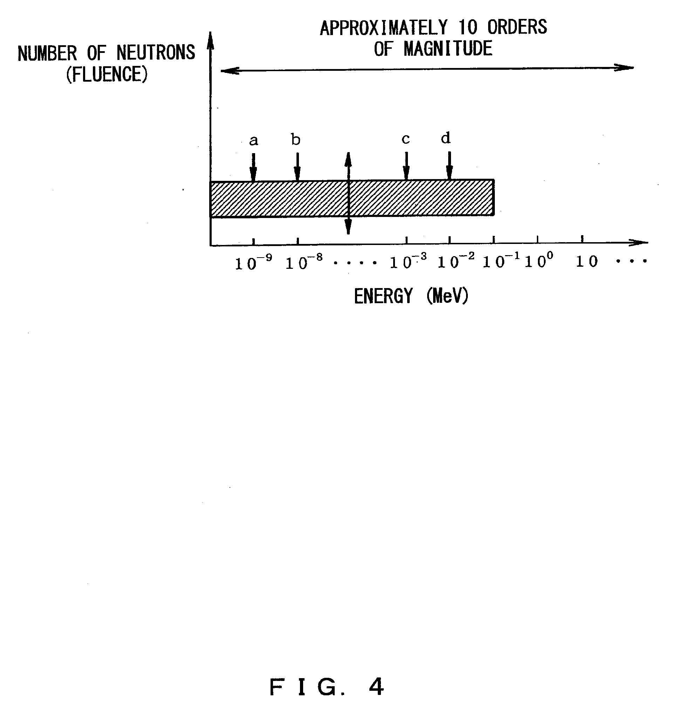

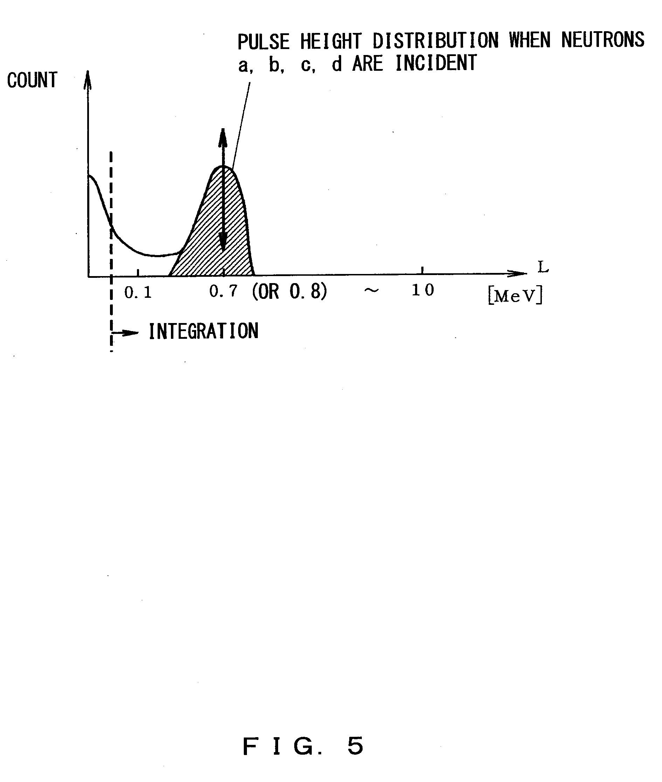

Next, the relation between incidence of neutrons on such a mixed gas detector 10 and the output is explained, referring to the drawings. First, a case is explained in which a low-energy neutron with energy below approximately 100 keV is incident on the mixed gas detector, referring to the drawings. Fig. 4 is a characteristic diagram showing the number of neutrons versus the energy of neutrons at 100 keV or below incident on a mixed gas detector; Fig. 5 is a characteristic diagram of the count number versus neutron energies at 100 keV or below.

When low-energy neutrons below approximately 100 keV as in Fig. 4 are incident on a mixed gas detector of this invention, detection is performed primarily through charged particles generated in nuclear reactions with the nitrogen gas, so that detection signals are output with a characteristic such as that shown in Fig. 5. When the number of incident neutrons shown in Fig. 4 increases or decreases, the peak count indicated by the inclined line in Fig. 5 increases or decreases. The detection sensitivity for low-energy neutrons below approximately 100 keV can be adjusted through the amount of nitrogen gas. However, the detection signals output for these low-energy neutrons below approximately 100 keV (a, b, c, d) appear in the same channels of 0.7 MeV or 0.8 MeV, regardless of the neutron energy a, b, c, d, so that there is no energy information for the incident neutrons. The detection signals pass through the amplifier 22 and waveform shaping amplifier 23, so that the detection pulse signals have pulse height levels L (horizontal axis) extending from 0.1 MeV to 20 MeV, as shown in Fig. 5.

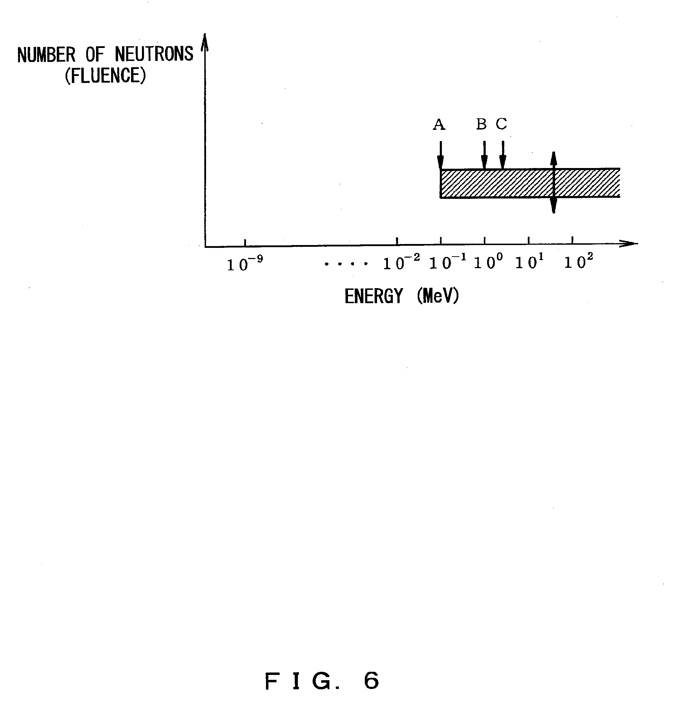

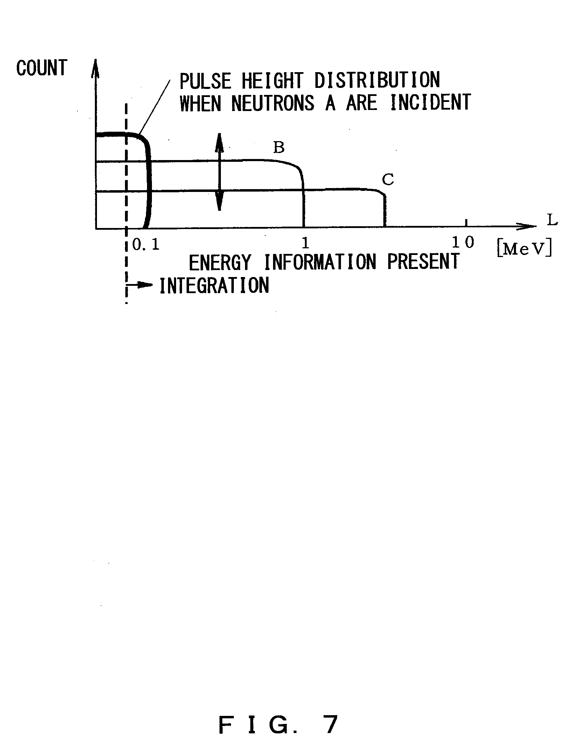

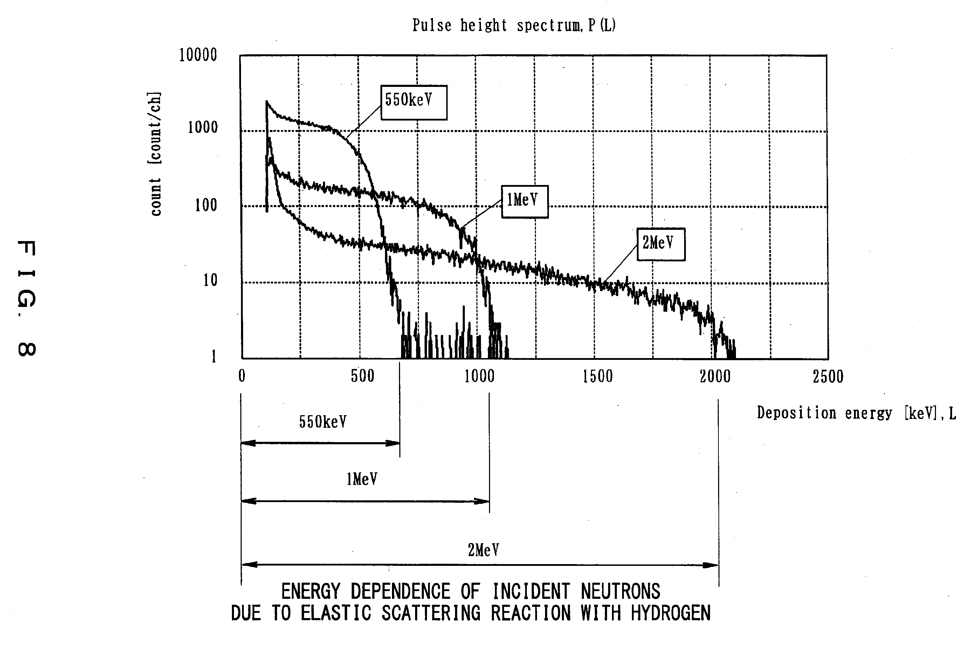

Next, incidence of intermediate- to high-energy neutrons, with energies exceeding approximately 100 keV, on the mixed gas detector is explained referring to the drawings. Fig. 6 is a characteristic diagram showing the number of neutrons versus neutron energies at 100 keV or above incident on a mixed gas detector, and Fig. 7 is a characteristic diagram showing the count number versus neutron energies at 100 keV or above. Fig. 8 is a characteristic diagram showing the response of a mixed gas detector 10 versus neutron energies (measured results).

When intermediate- to high-energy neutrons exceeding approximately 100 keV are incident on a mixed gas detector of this invention, as shown in Fig. 6, detection is performed through charged particles generated mainly through H(n,n)p elastic scattering and nuclear reactions with the organic compound gas (methane, ethane, propane), so that characteristic detection signals such as shown in Fig. 7 are output. When the number of incident neutrons shown in Fig. 6 increases or decreases, the count indicated in Fig. 7 increases or decreases. And, the detection sensitivity for intermediate to high energies exceeding approximately 100 keV can be adjusted through the quantities of the organic compound gas (methane, ethane, propane). Further, as is clear from Fig. 7, if the incident neutron energies (A, B, C) are different, the detection signal output is also different, and energy information for incident neutrons (A, B, C) can be obtained. Detection signals pass through the amplifier 22 and the waveform shaping amplifier 23, and as shown in Fig. 7, the pulse height level L (horizontal axis) is a detection pulse signal extending over the range 0.1 MeV to 20 MeV.

For example, in Fig. 8, it has been confirmed through experiments and other means that as the incident neutron energy changes between 550 keV, 1 MeV, and 2 MeV, count numbers are obtained for each of 550 keV, 1 MeV, and 2 MeV; in other words, it is seen that detection signals output from a mixed gas detector 10 comprise information on the pulse height corresponding to energy when an intermediate-energy neutron (approximately 100 keV to 10 MeV) is incident. Although not shown, it has been confirmed that pulse height corresponding to energy information is also comprised when high-energy neutrons (approximately 10 MeV and greater) are incident. In this way, detection of intermediate- to high-energy neutrons is accomplished by means of the organic compound gas (methane, ethane, propane).

Next, optimization of the mixing ratio of the gas mixture is explained. By appropriately selecting the nitrogen gas/organic compound gas mixing ratio and encapsulation pressure, the neutron energy-response characteristic, which represents the detection sensitivity (count rate per fluence) versus neutron energy for the proportional counter, can be made to approximate a neutron fluence-to-ambient dose equivalent (1 cm dose equivalent) conversion coefficient curve (neutron energy-ICRP 74 H* (10) response curve).

First, as a result of research by the inventors, it was learned with respect to the generalized mixing ratio that, when the sum of the mixing ratios of nitrogen gas to the organic compound gas is $\alpha + \beta = 1.0$, by preferentially setting the nitrogen gas mixing ratio $\alpha$ to $0.05 \leq \alpha \leq 0.5$, and setting the organic compound gas mixing ratio $\beta$ to $1.0 - \alpha$, the neutron energy-response characteristic which is the detection sensitivity can be brought into proximity to the neutron fluence-ambient dose equivalent (1 cm dose equivalent) conversion coefficient curve (neutron energy-ICRP 74 H* (10) response curve) over an energy range of approximately five orders of magnitude, from 0.025 eV to 10 eV and from 400 keV to 15 MeV.

The face that there is a range to the mixing ratio is due to the fact that optimization differs depending on the shape of the proportional counter tube, selection of the organic compound gas, and various other design parameters, and that the mixing ratio cannot be completely specified.

In cases in which any two or more among methane, ethane, and propane are combined and encapsulated as the organic compound gas, these mixing ratios are also adjusted. For example, encapsulation of ethane ($C_2H_6$) and propane ($C_3H_8$), with more hydrogen atoms than methane ($CH_4$), is anticipated to more readily result in H(n,n)p elastic scattering, so that the number of charged particles due to recoil protons p is increased, and adjustments can thus be made to increase the detection sensitivity. The mixing ratios of methane, ethane, or propane can also be used in adjustment. If such a range is satisfied, then a neutron energy-response characteristic representing a more satisfactory detection sensitivity than in the prior art can be obtained.

Next, specific mixing ratios of the gas mixture are explained. In optimizing the mixing ratio, the organic compound gas must be specified; in light of the results of various experiments, an explanation is given assuming that methane gas has been chosen. The following explanation assumes that the organic compound gas is methane gas.

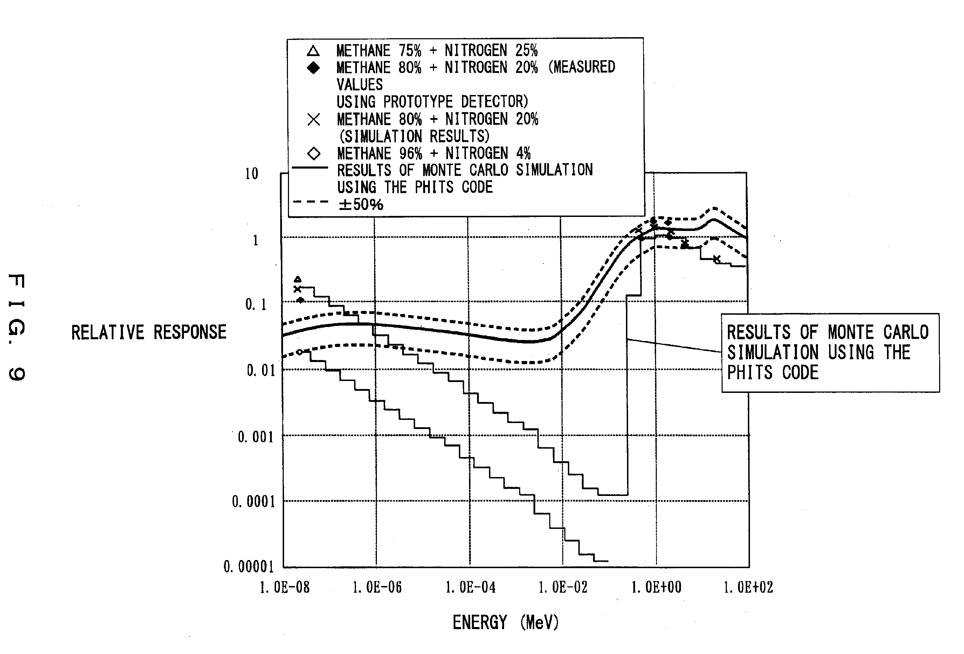

In order to match the thermal neutron energy characteristic (sensitivity) to the neutron ambient dose equivalent conversion coefficients in the recommendations of ICRP Pub. 74, it is necessary that the components of the organic gas mixture be 75% to 95% methane gas and 5% to 25% nitrogen gas, and it is still more preferable that approximately 80% be methane gas and approximately 20% be nitrogen gas. This is explained referring to the drawings. Fig. 9 is a characteristic diagram showing characteristics, by mixing ratio, for organic gas mixtures.

If the methane gas component is 95% or higher, then the nitrogen gas component is 5% or less, and so thermal neutrons (0.025 eV) are underestimated by 50% or less. As is clear from the characteristic (simulation) beginning with a diamond symbol (0) in the characteristic diagram, overall this results in a substantially downward shift from the neutron ambient dose equivalent conversion constants of the ICRP Pub. 74 recommendations, which is inappropriate.

When the methane gas component is 75% or lower, the nitrogen gas is 25% or higher, so that thermal neutrons are overestimated by a factor of two or more. This is clear from the fact that the point $\Delta$ in the characteristics is greatly shifted upward from the neutron ambient dose equivalent conversion coefficient of the recommendation of ICRP Pub. 74.

And, it was discovered that when the methane gas component is 80% and the nitrogen gas is 20%, the points $\times$ in the characteristics and the simulation characteristic can cause the neutron energy-response characteristic, which is the detection sensitivity, to be closer to the neutron fluence-ambient dose equivalent (1 cm dose equivalent) conversion coefficient curve (neutron energy-ICRP 74 H* (10) response curve) in the energy range from 0.025 eV to 10 eV and 400 keV to 15 MeV (approx. five orders of magnitude). Further, similar advantageous results were also confirmed through actual measurements using a prototype, as indicated by the points denoted by ♦ in the characteristic diagram.

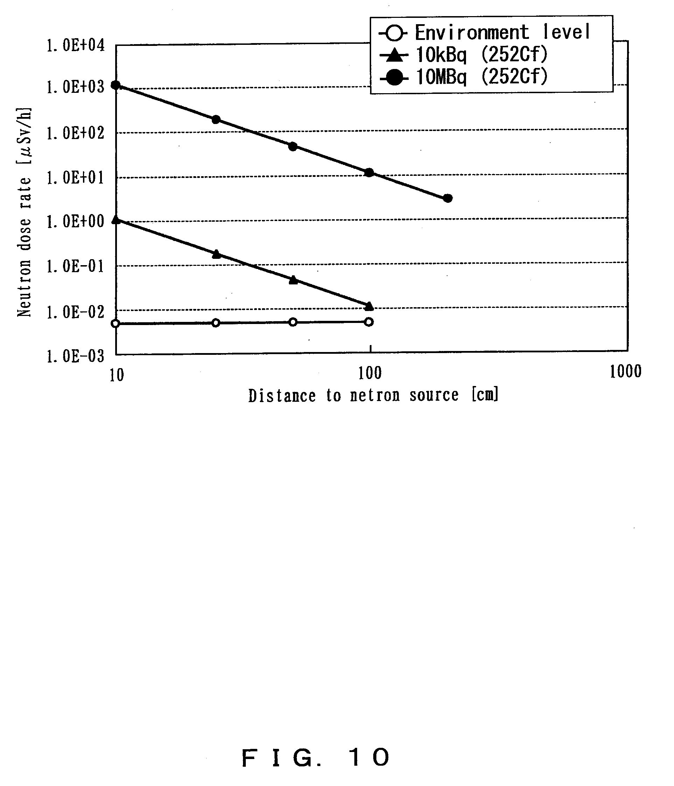

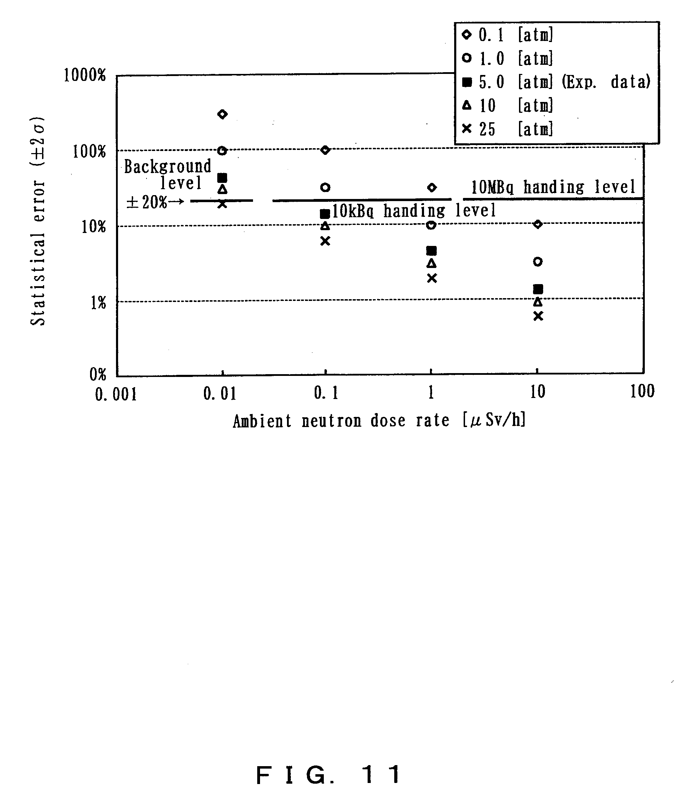

Next, the internal pressure due to the gas mixture in the encapsulated space 12 of the mixed gas detector is explained, referring to the drawings. Fig. 10 is a characteristic diagram of the radiation dose rate versus distance from the neutron source, and Fig. 11 is a characteristic diagram of statistical error versus radiation dose rate. Radiation dose rates taking fast neutrons (sensitivity to $^{252}$Cf) to be the neutron source, and radiation dose rates for neutrons in the environment, are as shown in Fig. 10. Here, as fast neutrons (sensitivity to 252Cf), neutrons (10 nSv/h to 1 $\mu$Sv/h) from a BSS exclusion level (10 kBq) neutron source, and neutrons (1 $\mu$Sv/h to 10 mSv/h) from a neutron source exceeding the BSS exemption level (10 kBq), are used.

In order to match the neutron sensitivity for such fast neutrons (sensitivity to $^{252}$Cf) to the neutron ambient dose equivalent conversion coefficients of ICRP Pub. 74, a statistical error level ($\pm 2\sigma$) for the count values of detected neutrons of 20% or lower is adopted as a target.

When primarily measuring environmental neutrons (5 nSv/h to 10 nSv/h), points $\times$ in the characteristic diagram are at 20% or lower, and so the optimum internal gas mixture pressure necessary in order to hold statistical errors in the count values of detected neutrons ($\pm2\sigma$) to 20% or lower is 25 atmospheres or higher, as shown in Fig. 11. When primarily measuring neutrons from a neutron line source at the BSS exclusion level (10 kBq) (10 nSv/h to 1 $\mu$Sv/h), the points $\times$, points $\triangle$, and points $\blacksquare$ in the characteristic diagram are at 20% or below, and so 1 atmosphere or higher is necessary. And, when measuring neutrons from a neutron line source exceeding the BSS exclusion level (10 kBq) (1 $\mu$Sv/h to 10 mSv/h), the points $\times$, points $\triangle$, points $\blacksquare$, points O, and points $\diamond$ in the characteristic diagram are at 20% or below, and so 0.1 atmosphere or higher is necessary. Considering these conditions, the internal pressure of the gas mixture in the encapsulated space 12 of the mixed gas detector may be set to 0.1 atmosphere (0.01 MPa) or higher, and 25 atmospheres (2.5 MPa) or less. In particular, if 25 atmospheres (2.5 MPa) is used, the statistical error ($\pm2\sigma$) for the count value of all detected neutrons can be held to 20% or less.

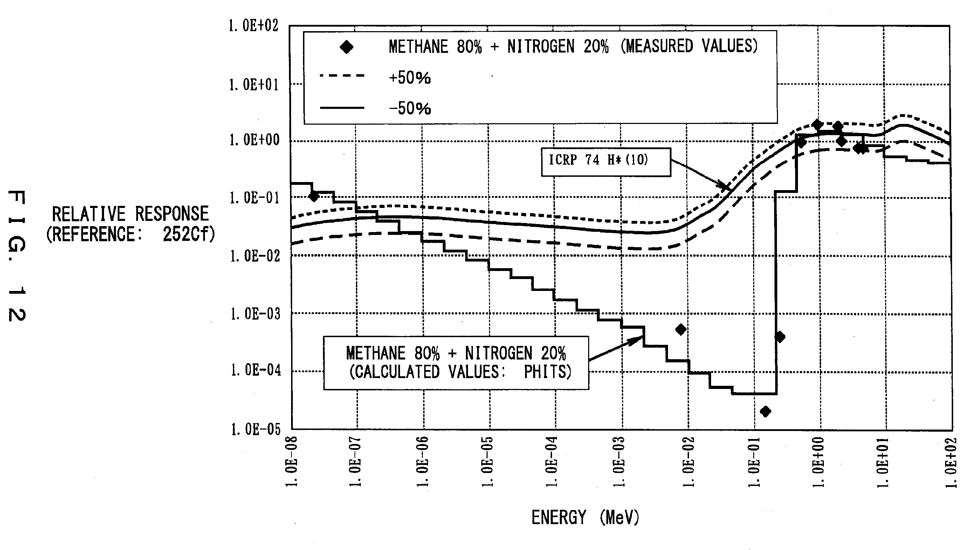

By realizing the above gas conditions, the output characteristic of the mixed gas detector becomes, for example, a characteristic as shown in the characteristic diagram of Fig. 12 which represents the characteristics by mixing ratio for organic gas mixture. The detection sensitivity over approximately five orders of magnitude of energy, with the energies of neutrons incident on the mixed gas detector at 0.025 eV to 10 eV and 400 keV to 15 MeV, is seen to cause the neutron energy-response characteristic to be close to the neutron fluence-ambient dose equivalent (1 cm dose equivalent) conversion coefficient curve (neutron energy-ICRP 74 H* (10) response curve).

In the range from 10 eV to 400 keV also, because from 10 eV to approximately 100 keV or less there is no energy information because reactions are with the nitrogen gas, but it was discovered that at or above approximately 100 keV there are reactions with the organic gas, and detection signals comprise effective information, so that information can be obtained for this 10 eV to 400 keV range also through correction by a data correction portion 25 and dose equivalent operation portion 26 explained below (corrections using a G(L) function and G'(L) function, explained below). As a result, the neutron sensitivity can be enhanced over the entire energy range (0.025 eV to 15 MeV).

This is superior to BF$_3$ proportional counters, $^3$He proportional counter tubes, and $^6$LiI(Eu) scintillation detectors of the prior art, which depend on the neutron reaction cross-section, so that the neutron sensitivity is much lower over a partial energy range (10 eV to several hundred keV), and information for this range cannot easily be obtained.

A mixed gas detector 10 has been described.

Next, a processing circuit portion 20 is explained.

The high-voltage power supply 21 supplies high voltages of 1000 V to 4000 V to a pair of electrodes of a mixed gas detector 10. Detection pulse signals are output based on current output extracted from the electrodes of the mixed gas detector 10. The detection pulse signals are input to a preamplifier 22.

The preamplifier 22 amplifies the detection pulse signals to a peak enabling use by the waveform shaping amplifier 23.

The waveform shaping amplifier 23 outputs an amplified detection pulse signal with a peak and waveform enabling A/D conversion by the A/D conversion portion 24. The preamplifier 22 and waveform shaping amplifier 23 form the amplifiers of this invention.

The A/D conversion portion 24 converts the detection pulse signal output from the waveform shaping amplifier 23 into detection pulse data. This detection pulse data is pulse data with a pulse height proportional to the neutron energy. This is for performing pulse height analysis of pulse data, which is so-called neutron energy information. As explained above, detection pulse signals have pulse height levels L extending from 0.1 MeV to 20 MeV, and so A/D converted detection pulse data is data with pulse height levels L extending from 0.1 MeV to 20 MeV.

The data correction portion 25 converts detection pulse data into G(L) function data, described below. The specific operation is as follows.

The CPU 251 functions as means to discriminate input detection pulse data into prescribed range levels (from lower-side peak levels to upper-side peak levels) by the peak level of the detection pulse data. Because detection pulse data also has peak levels ranging from 0.1 MeV to 20 MeV, data is divided into a plurality of levels with peak levels L extending from 0.1 MeV to 20 MeV. For example, discrimination into n peak levels, which are a first peak level, second peak level, ..., nth peak level, is performed. As one example, discrimination by peak levels is performed with, as first to sixth peak levels, the neutron energy (MeV) range levels 0.1 to 0.5, 0.5 to 1.0, 1.0 to 2.0, 2.0 to 5.0, 5.0 to 10.0, and 10.0 to 20.0. To simplify the explanation, in this example only rough discrimination into six levels is performed; in actuality, classification into, for example, approximately 100 levels is performed.

Through this discrimination by the CPU 251, unnecessary components at or below a prescribed level (noise signals and signals due to $\gamma$ rays) are removed, and only the desired detection signals due to neutrons can be extracted. A plurality of detection signals, detected by peak level, are output.

The CPU 251 functions as means for selecting and reading G(L) function data corresponding to detection pulse data, divided by peak level L, from the G(L) function storage portion 252, and also functions as means for outputting this G(L) function data to the dose equivalent operation portion 26. Correction is performed to change the weighting of the dose per pulse. Details of this weighting change are described below.

The CPU 261 of the dose equivalent operation portion 26 functions as means for discriminating the input G(L) function data into peak levels in prescribed ranges (from lower-side peak levels to upper-side peak levels). For example, discrimination into n peak levels, which are a first peak level, second peak level, ..., nth peak level, is performed. As one example, levels are first to sixth peak levels, and the peak levels of the neutron energy (MeV) are discriminated into the peak levels $G_1(L)$, $G_2(L)$, $G_3(L)$, $G_4(L)$, $G_5(L)$, $G_6(L)$. To simplify the explanation, in this example only rough discrimination into six levels is performed; in actuality, classification into, for example, approximately 100 levels is performed.

The CPU 261 of the dose equivalent operation portion 26 counts the G(L) function data, divided by peak level, by each of the peak levels, and generates count data by peak level. The count data for the peak level corresponding to the count data by peak level $n_1(L)$, $n_2(L)$, $n_3(L)$, $n_4(L)$, $n_5(L)$, $n_6(L)$ is incremented by one and stored in the storage portion 262. This count data represents the count value per unit time (that is, the counting rate) at the peak level L in a certain range (energy value E). This processing is performed each time G(L) function data is input from the data correction portion 25. To simplify the explanation, in this example only rough discrimination into six levels is performed; in actuality, classification into, for example, approximately 100 levels is performed.

The CPU 261 of the dose equivalent operation portion 26 functions as means for multiplying the count data $n_1(L)$, $n_2(L)$, $n_3(L)$, $n_4(L)$, $n_5(L)$, $n_6(L)$ by $G_1(L)$, $G_2(L)$, $G_3(L)$, $G_4(L)$, $G_5(L)$, $G_6(L)$ in each prescribed time period to generate product data by peak level, adding all the product data by peak level, and outputting the added value, which is the ambient dose equivalent (1 cm dose equivalent). If a is a proportionality constant, then this is expressed by equation (1) below.

[E 1]

$$\text{Ambient dose equivalent (1 cm dose equivalent) data} =$$

$$a \cdot \sum_{i=1}^{n} \{ G_i(L) \cdot n_i(L) \} \tag{1}$$

When there is no such correction using the G(L) function, the response by means of count values follows the neutron energy-response characteristic which is the original sensitivity curve of the neutron detector 10, as shown in Fig. 12. However, by performing weighting of G(L) function data as explained above, the tendency of the characteristic when the neutron energy is plotted along the horizontal axis and the ambient dose equivalent (1 cm dose equivalent) is plotted along the vertical axis, as the detection sensitivity, can be made to approximate the neutron fluence-to-ambient dose equivalent (1 cm dose equivalent) conversion coefficient curve (neutron energy-ICRP 74 H* (10) response curve), and the detection sensitivity is enhanced.

In equation (1), by finely dividing the pulse height level ranges (increasing the value of n), the level ranges are made narrower, and the response through ambient dose equivalents (1 cm dose equivalents) can be made to more closely follow the neutron fluence-to-ambient dose equivalent (1 cm dose equivalent) conversion coefficient curve (neutron energy-ICRP 74 H* (10) response curve). By more finely dividing peak level ranges in this way, that is, by increasing the value of the number of additions n in equation (1), greater accuracy is possible.

The display driver 31 of the display portion 30 takes as input data on the ambient dose equivalent(1 cm dose equivalent) from the dose equivalent operation portion 26, and controls the display 32.

The display 32 of the display portion 30 displays the ambient dose equivalent (1 cm dose equivalent) according to control by the display driver 31, to enable direct reading. The configuration described above is housed in a portable case. Such a neutron dosimeter 1 displays data on a display 32 so as to enable direct reading of the ambient dose equivalent (1 cm dose equivalent) with high accuracy.

Next, the G(L) function is explained.

As shown in a characteristic diagram showing characteristics by mixing ratio of the organic mixing gas in Fig. 12, a mixed gas detector can perform measurements with good accuracy over an energy range of approximately five orders of magnitude, for neutron energies incident on the mixed gas detector of 0.025 eV to 10 eV and from 400 keV to 15 MeV; but from 10 eV to 400 keV, sensitivity is insufficient, and detection accuracy is low. Hence correction using a G(L) function is performed, to correct the neutron dose in the energy range from 10 eV to 400 keV, in which accuracy is insufficient.

In the incident neutron energy range from 10 eV to 400 keV, in which accuracy is insufficient, the following innovation was adopted to raise the accuracy of correction by means of a G(L) function.

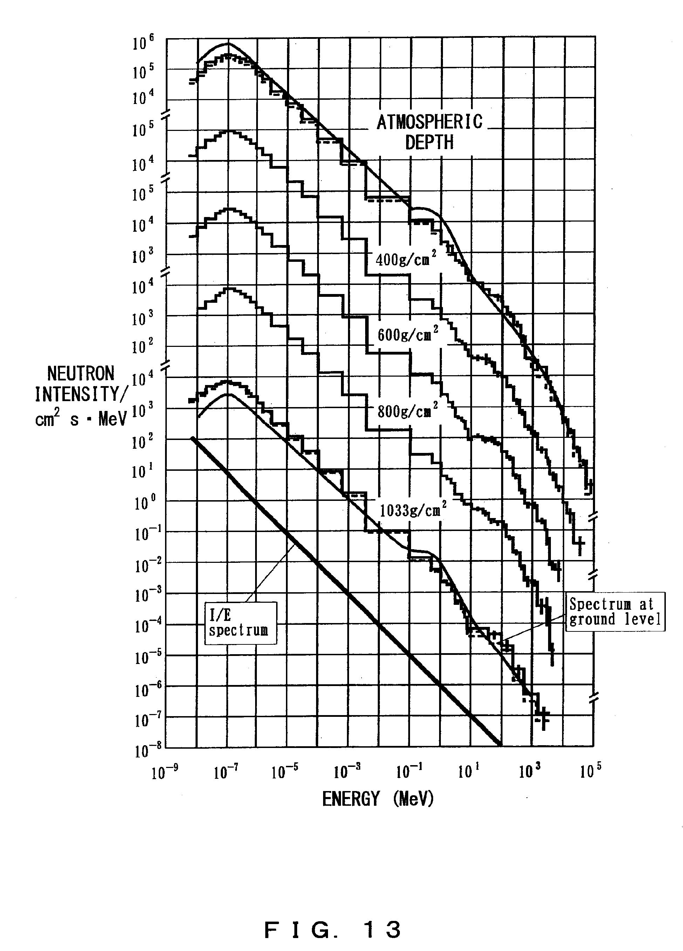

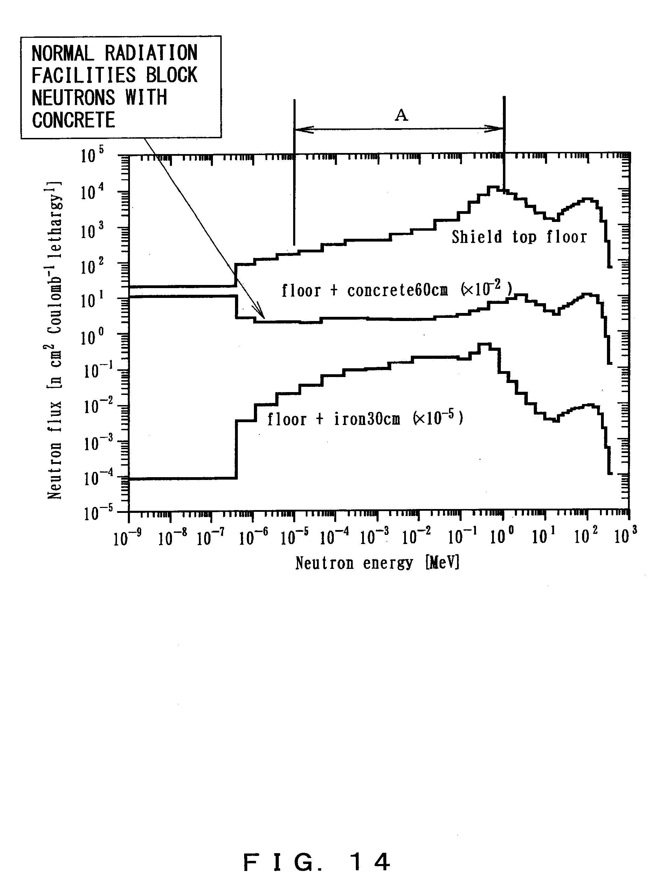

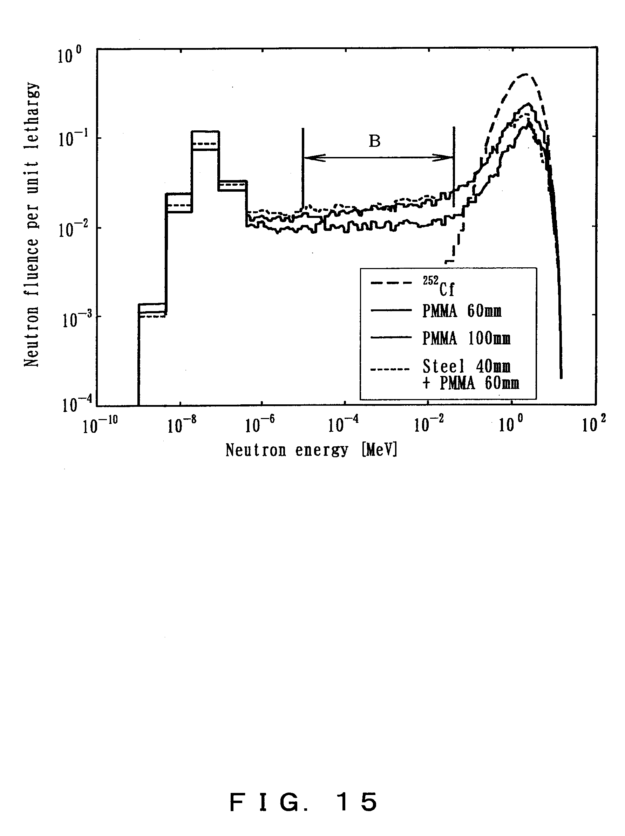

First, the principle of correction is described below. It is known that in nearly all cases, neutron energy spectra have the same shape in the region at and below 1 MeV (1/E spectrum). This point is explained referring to the drawings. Fig. 13 is a characteristic diagram showing the energy spectrum of background neutrons (arising from cosmic rays), Fig. 14 shows the neutron energy spectrum when neutrons generated by a high-energy accelerator (800 MeV) pass through a concrete shielding member (an actual near field), and Fig. 15 shows the neutron energy spectrum occurring for a $^{252}$Cf neutron source, and the neutron energy spectrum for a field in which a shielding member exists (an actual near field).

As shown in Fig. 13, in the region at and below 1 MeV the spectrum shape is the same (1/E spectrum). As shown in Fig. 14 and Fig. 15, from 10 eV to 400 keV, the spectrum is constant in proportion to the number of neutrons at and above 1 MeV. This indicates that the spectrum is a 1/E spectrum. This is because nearly all neutrons at and below 1 MeV result from deceleration due to interactions of neutrons at and above 1 MeV with matter. That is, it can be said that the change in the number of neutrons at and above 1 MeV originates in the change in the number of neutrons at and below 1 MeV, and the numbers have a proportional relation. From this, it is possible to correct the number of neutrons from 10 eV to 400 keV from the number of neutrons at and above 1 MeV.

Hence in this invention, a G(L) function is used to correct the dose equivalent for neutrons from 10 eV to 400 keV, which is being considered, from information for neutrons at 1 MeV to 2 MeV.

The neutron dose H can be represented in general by equation (2) below, where h(E) is the neutron ambient dose equivalent conversion coefficient (pSvcm$^2$) recommended by ICRP 74. Here, 0.025 eV to 15 MeV represents the energies of neutrons incident on the mixed gas detector.

[E 2]

$$H = \int_{0.025eV}^{15MeV} h(E)\Phi(E)\,dE \tag{2}$$

This equation (2) is integrated from 0.025 eV to 15 MeV; this integral can be subdivided as in equation (3) below.

[E 3]

$$H = \int_{0.025eV}^{10eV} h(E)\Phi(E)\,dE + \int_{10eV}^{400keV} h(E)\Phi(E)\,dE + \int_{400keV}^{15MeV} h(E)\Phi(E)\,dE \tag{3}$$

The first and third terms in equation (3) can be detected with high accuracy by the mixed gas detector 10; with respect to the second term, while detection with high accuracy is possible in the pulse height level ranges of incident neutron energies of 100 keV to 400 keV among the range 10 eV to 400 keV, detection is only possible with low accuracy in the pulse height level range from 10 eV to 100 keV, and so the as-is detection accuracy is low. Hence other information is used to perform correction.

However, the above-described $\Phi(E)$ cannot be determined directly, and so a conversion in equation (2) is performed. Here, if the pulse height value from the organic gas mixture is L, the neutron pulse height distribution is P(L), the detector neutron response is R(E,L), and the G(E) function corresponding to pulse height values is G(L) (possible because peaks comprise energy information), then the following equations (4) and (5) are obtained.

[E 4]

$$h(E) = \int R(E, L) G(L) dL \tag{4}$$

[E 5]

$$P(L) = \int R(E, L) \Phi(E) dE \tag{5}$$

Substituting the above equation (4) into equation (2) gives the following equation (6).
[E 6]

$$H = \iint R(E, L) G(L) \Phi(E) dE dL \tag{6}$$

And, substituting the above equation (5) into equation (6) gives the following equation (7).
[E 7]

$$H = \int P(L) G(L) dL \tag{7}$$

From this, the energy ranges for the first, second, and third terms in equation (3) which are being considered can be expressed by equations (8) to (10) below. The first term is expressed by the following equation (8).
[E 8]

$$\int_{0.025eV}^{10eV} h(E) \Phi(E) dE = \int_{400keV}^{1MeV} P(L) G(L) dL \tag{8}$$

This utilizes the fact that protons due to the nitrogen reaction N(n,p) have an output of 626 keV (approximately 700 keV). Next, the second term is expressed by the following equation (9).

[E 9]

$$\int_{10eV}^{400keV} h(E)\,\Phi(E)\,dE = \int_{10eV}^{400keV} P(L)\,G(L)\,dL = k\int_{1MeV}^{2MeV} P(L)\,G(L)\,dL \tag{9}$$

From the above explanation of linearity in the region 10 eV to 400 keV, this correction is possible utilizing the peak L from 1 MeV to 2 MeV. Next, the third term is expressed by the following equation (10).

[E 10]

$$\int_{400keV}^{15MeV} h(E)\,\Phi(E)\,dE = \int_{400keV}^{15MeV} P(L)\,G(L)\,dL \tag{10}$$

Because the output energy due to elastic scattering by the hydrogen atoms of methane has information on the energy of the incident neutron, calculation is possible. Substituting these equations (8), (9) and (10) into equation (3) yields the following equation (11).

[E 11]

$$H = \int_{400keV}^{1MeV} P(L)\,G(L)\,dL + k\int_{1MeV}^{2MeV} P(L)\,G(L)\,dL + \int_{400keV}^{15MeV} P(L)\,G(L)\,dL \tag{11}$$

This equation (11) can be modified to obtain the following equation (12).

[E 12]

$$H = \int_{400keV}^{15MeV} P(L)\,G'(L)\,dL \tag{12}$$

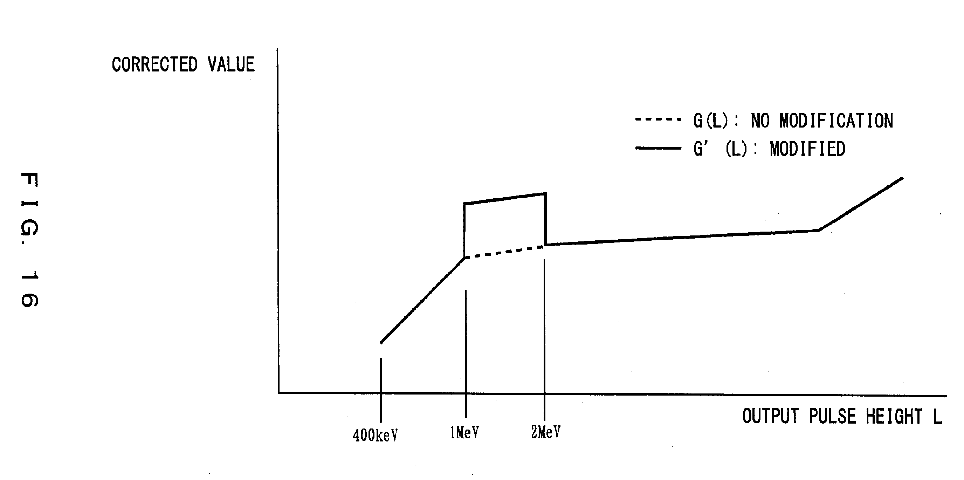

Hence from equation (12), the output of signals obtained from an organic gas mixture can be used to obtain a neutron dose with improved characteristics in the range which was being considered, from 10 eV to 400 keV. And, Fig. 16 shows the characteristics G(L) and G'(L) for the output peak L, taking these factors into consideration. G(L) is before modification, and G'(L) is after modification. These characteristics can be divided by n according to peak level, and in addition to the above-described $G_1(L)$, $G_2(L)$, $G_3(L)$, ..., $G_n(L)$ prior to modification, if the new modified $G'_1(L)$, $G'_2(L)$, $G'_3(L)$, ..., $G'_n(L)$ are registered in the G(L) function storage portion 252, the energy characteristic of the final output values can be made to closely coincide with the 1 cm dose equivalent conversion coefficients, from thermal-energy neutrons up to high-energy neutrons exceeding 10 MeV.

Of the entire range of neutron energies, from 0.025 eV to 15 MeV, of incident neutrons, correction is performed for neutron energies from 10 eV to 400 keV, and so the data correction portion 25 and dose equivalent operation portion 26 function as follows when performing correction over the entire region from 0.1 MeV to 20 MeV from the mixed gas detector 10.

The CPU 251 of the data correction portion 25 discards detection pulse data when detection pulse data with a peak at or below 400 keV is input, and, when detection pulse data with a peak of 400 keV to 15 MeV is input, reads the G'(L) function data corrected by peak level from the G(L) function storage portion 252, and outputs this G'(L) function data to the dose equivalent operation portion 26.

The CPU 261 of the dose equivalent operation portion 26 multiplies the G'(L) function data corrected by peak level and the count data to generate product data for peaks from 400 keV to 15 MeV, adds all the product data for these peaks from 400 keV to 15 MeV, and outputs the result as ambient dose equivalent (1 cm dose equivalent) data. Correction is performed in this manner. By means of such a neutron dosimeter of this invention, an ambient dose equivalent (1 cm dose equivalent) can be read directly with high accuracy.

A configuration using G(L) based on the above equation (7) may be adopted for the entire region from 0.1 MeV to 20 MeV from the mixed gas detector 10, without performing correction; but considering the decline in detection accuracy, it is preferable that correction like that of equation (12) above be performed.

A neutron dosimeter of this invention has been explained. Because a mixed gas detector in which a gas mixture is encapsulated performs detection so as to obtain information on neutron energies at pulse height levels over a broad range, as explained above, correction based on information is made possible, and high detection precision is secured.

And, other than the detector unit 11, the detection medium is gas only, and a thermal neutron absorption material is rendered unnecessary, so that weight is greatly reduced compared with neutron dosimeters of the prior art, and insofar as the device is extremely easy to carry, the device is ideal for use as a portable neutron dosimeter. Although weight is reduced, of course applications are not limited to portable devices, and the device may be used as a stationary neutron dosimeter. Such a neutron dosimeter can be described as a heretofore nonexistent, novel type of neutron dosimeter.

By means of a neutron dosimeter of this invention as described above, lighter weight is achieved. Recently there has been a rapid increase in facilities which generate neutrons, centered on accelerator facilities; and in recent years the occurrence of software errors in semiconductors due to cosmic ray-induced neutrons has grown into a major problem mainly in the semiconductor industry. Hence there has been an urgent demand for lightweight neutron dosimeters, and neutron dosimeters of this invention are expected to prove highly useful.

Further, when a pulse height is obtained by means of a circuit using a pulse height discriminator (discrimination circuit) as in the prior art, there exists a measurement lower-limit level due to electrical circuit noise and signal noise due to γ rays, the problem cannot be addressed by a discrimination circuit such as that of Patent Document 1, and the discrimination level can be lowered beyond a certain value. However, it had been deemed extremely difficult to use an organic gas mixture to measure neutrons at several hundred keV or below with accuracy; but in this embodiment, these problems are resolved, and light weight is achieved while maintaining detection performance, as a result of which ease of use is greatly improved.

Further, correction methods employing G(E) functions such as this are utilized in γ ray measurement employing solid-state detectors, but there are no examples of application to neutron detectors employing gas detectors.

By means of the above-described invention, substantial reduction in weight is achieved by avoiding the use of moderators for detection, and even when there is deviation of the detection sensitivity from the target detection sensitivity arising from the absence of a moderator, by performing compensation through signal processing, detection performance can be maintained, to provide a neutron dosimeter with improved usability for users.

**Claims**

1. A neutron dosimeter, comprising:

a mixed gas detector, which encapsulates a gas mixture comprising a nitrogen gas and an organic compound gas and having a nitrogen gas mixing ratio α of $0.05 \leq \alpha \leq 0.25$ and an organic compound gas mixing ratio β of $1.0 - \alpha$ when the sum of the mixing ratio α of the nitrogen gas and the mixing ratio β of the organic compound gas is 1.0, and which, in response to neutron detection, outputs peak detection pulse signals according to the energy of the detected neutron;

an amplifier, which amplifies the detection pulse signals output from the mixed gas detector to a prescribed peak level;

an A/D conversion portion, which converts the detection pulse signals output from the amplifier into detection pulse data;

a data correction portion, in which G(L) function data is registered by peak level L, and which converts the detection pulse data, output from the A/D conversion portion, into G(L) function data corresponding to the peak level L;

a dose equivalent operation portion, which counts the number of G(L) function data items output from the data correction portion by peak level and generates count data by peak level, multiplies the G(L) function data and count data by peak level to generate product data by peak level, and adds all the product data by peak level to output ambient dose equivalent (1 cm dose equivalent) data; and

a display portion which uses ambient dose equivalent (1 cm dose equivalent) data to display ambient dose equivalents (1 cm dose equivalents);

the neutron dosimeter being **characterized in that**

G(L) function data is employed such that the tendency of the characteristic when neutron energy is plotted along the horizontal axis and the ambient dose equivalent (1 cm dose equivalent) is plotted along the vertical axis is made to approximate a neutron fluence-ambient dose equivalent (1 cm dose equivalent) conversion coefficient curve (neutron energy-ICRP 74 H* (10) response curve).

2. The neutron dosimeter according to Claim 1, **characterized in that** the organic compound gas is methane gas, the nitrogen gas mixing ratio is $\alpha = 0.20$, and the methane gas mixing ratio is $\beta = 0.80$.

3. The neutron dosimeter according to Claim 2, **characterized in that** the internal pressure of the gas mixture encapsulated in the mixed gas detector is 0.1 atmosphere (0.01 MPa) or higher and 25 atmospheres (2.5 MPa) or lower.

4. The neutron dosimeter according to Claim 1, **characterized in that**, in order to perform correction for neutron energies from 10 eV to 400 keV among the entire range of neutron energies from 0.025 eV to 15 MeV of incident neutrons, the data correction portion discards detection pulse data when detection pulse data with a peak level of 400 keV or below is input, and outputs corrected G'(L) function data by peak level when detection pulse data with a peak level of 400 keV to 15 MeV is input, and **in that** the dose equivalent operation portion multiplies the corrected G'(L) function data and the count data by peak level to generate product data for peaks from 400 keV to 15 MeV, and outputs data of the sum of all the product data for peaks from 400 keV to 15 MeV as ambient dose equivalent (1 cm dose equivalent) data.

FIG. 1

1 NEUTRON DOSIMETER

10 MIXED GAS DETECTOR

20 PROCESSING CIRCUIT PORTION

30 DISPLAY PORTION

22
PREAMPLIFIER

23
WAVEFORM SHAPING AMPLIFIER

24
A/D CONVERSION PORTION

25
DATA CORRECTION PORTION

26
DOSE EQUIVALENT OPERATION PORTION

31
DISPLAY DRIVER

32
DISPLAY

21
HIGH-VOLTAGE POWER SUPPLY

(a)

10 MIXED GAS DETECTOR
(SHOWING AN EXAMPLE OF A HOLLOW-CYLINDER TYPE)

11 DETECTOR UNIT

12 ENCAPSULATED SPACE

(b)                          (c)

12                           12

11                           11

F I G.  2

(a)

25 DATA
CORRECTION PORTION

251
CPU

252
G (L)
FUNCTION
STORAGE
PORTION

(b)

26 DOSE EQUIVALENT
OPERATION PORTION

261
CPU

262
STORAGE
PORTION

F I G. 3

F I G.  4

PULSE HEIGHT DISTRIBUTION WHEN NEUTRONS
a, b, c, d ARE INCIDENT

COUNT

0.1          0.7 (OR 0.8)      ~      10      [MeV]

INTEGRATION

F I G. 5

F I G. 6

COUNT

PULSE HEIGHT DISTRIBUTION
WHEN NEUTRONS A ARE INCIDENT

B

C

0.1      1      10   [MeV]   L

ENERGY INFORMATION PRESENT

INTEGRATION

F I G. 7

F I G. 8

FIG. 9

RELATIVE RESPONSE

ENERGY (MeV)

△ METHANE 75% + NITROGEN 25%
◆ METHANE 80% + NITROGEN 20% (MEASURED VALUES
USING PROTOTYPE DETECTOR)
✕ METHANE 80% + NITROGEN 20%
(SIMULATION RESULTS)
◇ METHANE 96% + NITROGEN 4%
─── RESULTS OF MONTE CARLO SIMULATION
USING THE PHITS CODE
─ ─ ─ ±50%

RESULTS OF MONTE CARLO
SIMULATION USING THE
PHITS CODE

F I G. 1 0

F I G. 1 1

F I G.  1 2

F I G. 1 3

F I G. 1 4

F I G. 1 5

F I G.  1 6

(a)

<u>100 NEUTRON DOSIMETER</u>

103 BORON
PLASTIC MATERIAL

104 POLYETHYLENE
MODERATOR

105 RATE METER

102 POLYETHYLENE
MODERATOR

101 BF₃ PROPORTIONAL
COUNTER

(b)

<u>200 NEUTRON DOSIMETER</u>

206 POLYETHYLENE MODERATOR

203 POLYETHYLENE DISC

207 POLYETHYLENE MATERIAL

205 CADMIUM

202 PHOTOMULTIPLIER
TUBE

204 POLYETHYLENE
MODERATOR

201 ⁶LiI(Eu)
SCINTILLATOR

208 HOLDING RING

202 PHOTOMULTIPLIER
TUBE

(c)

301 ³He PROPORTIONAL
COUNTER

302 POLYETHYLENE
MODERATOR

303 THERMAL
NEUTRON ABSORBER

304 POLYETHYLENE
MODERATOR

305 SIGNAL
PROCESSING PORTION

306 OPERATION PANEL

<u>300 NEUTRON DOSIMETER</u>

(d)

401 ³He PROPORTIONAL
COUNTER

402 POLYETHYLENE
MODERATOR

403 THERMAL
NEUTRON ABSORBER

404 POLYETHYLENE
MODERATOR

405 SIGNAL
PROCESSING PORTION

<u>400 NEUTRON DOSIMETER</u>

F I G. 1 7

FIG. 18

F I G. 1 9

F I G. 2 0

## INTERNATIONAL SEARCH REPORT

| International application No. |
| --- |
| PCT/JP2009/000906 |

A.   CLASSIFICATION OF SUBJECT MATTER
*G01T3/00*(2006.01)i

According to International Patent Classification (IPC) or to both national classification and IPC

B.   FIELDS SEARCHED

Minimum documentation searched (classification system followed by classification symbols)
G01T1/00-7/12

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus(JDreamII), JST7580(JDreamII)

C.   DOCUMENTS CONSIDERED TO BE RELEVANT

| Category* | Citation of document, with indication, where appropriate, of the relevant passages | Relevant to claim No. |
| --- | --- | --- |
| X<br>A | JP 2007-218657 A  (Fuji Electric Systems Co., Ltd.),<br>30 August, 2007 (30.08.07),<br>Par. Nos. [0040] to [0042], [0047], [0051] to [0054], [0059]; Figs. 1, 4, 6<br>(Family: none) | 1-3<br>4 |
| A | JP 2005-257524 A  (Japan Nuclear Cycle Development Institute),<br>22 September, 2005 (22.09.05),<br>Full text; all drawings<br>(Family: none) | 1-4 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 March, 2009 (16.03.09) | Date of mailing of the international search report<br>31 March, 2009 (31.03.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007218657 A
- JP 2006275602 A
- US 034552 A